# DEMANDE DE BREVET EUROPEEN

(11) **EP 1 475 729 A1**
(43) Date de publication de la demande: **10.11.2004**
(21) Numéro de dépôt: 03291092.9
(22) Date de dépôt: 07.05.2003
(51) Int. Cl.: G06F 17/60

(54) **Dispositif de stockage dans lequel est enregistré un programme de commande d'un ordinateur pour l'estimation d'un risque à partir d'une distribution de données, et dispositif d'estimation de risque de données distribuées aléatoirement avec un lien de cohérence**

(71) Demandeur: BNP Paribas Asset Management, 75116 Paris (FR)
(72) Inventeur: Berge, Julien, 75116 Paris (FR); Fellous, Olivier, 75116 Paris (FR); Ternay, Amaury, 75116 Paris (FR)
(74) Mandataire: de Kernier, Gabriel

(57) **Abrégé**

Dispositif de stockage dans lequel est enregistré un programme de commande d'un ordinateur pour l'estimation de l'échelle de risque d'une distribution de données, notamment pour exécuter un ordre de transaction, achat ou vente, d'une valeur sur un marché, ledit programme contenant des instructions aptes à effectuer, lorsque ledit programme est exécuté sur ledit ordinateur :
- le calcul d'un volume théorique Vₜ et d'une durée Dₜ de traitement du volume théorique Vₜ sur le marché de la valeur considérée,
- l'élimination de valeurs extrêmes de la distribution, et
- le calcul d'une plage de variation du marché.

## Description

La présente invention concerne le domaine de l'estimation d'un risque à partir d'une distribution de données pour pouvoir estimer des conditions de déroulement d'une action future ou estimer la qualité de déroulement d'une action passée. L'invention peut s'appliquer au domaine financier, à court ou long terme, en particulier aux marchés d'actions, d'obligations, de matières premières ou de consommation, des produits dérivés, etc. L'invention peut aussi s'appliquer au marché immobilier, au domaine des assurances, à la maintenance de machines, etc.

Dans un marché financier, l'étape suivant une décision d'investissement est l'étape de négociation de l'ordre de bourse correspondant. Les modalités d'exécution de l'ordre dépendent de la taille de l'ordre, de la liquidité du marché, de facteurs motivant l'ordre, etc. Les modalités d'exécution sont susceptibles d'avoir un impact important sur les coûts engendrés par la réalisation de la transaction et sur la performance financière. À titre d'exemple, un coût de transaction de 4% exige un investissement de 100 pour placer une somme de 96. Le placement devra réaliser une performance de 4,17 % pour retrouver la somme investie au départ.

Il est donc utile de trouver un bon compromis entre le risque encouru et le profit espéré.

Selon les modèles usuels, les évènements rares sont ignorés au profit des évènements moyens. Ainsi, le besoin en capital d'une entreprise cherchant à provisionner un montant estimé de sinistre correspond au coût moyen du sinistre potentiel, en d'autres termes à l'espérance mathématique de la valeur du sinistre. Ces situations correspondent à la distribution statistique en forme de cloche de la loi de Laplace-Gauss selon laquelle la probabilité de s'éloigner de dix écarts types de la moyenne est égale à l'inverse du nombre d'Avogadro, soit 10⁻²³. On peut ainsi calculer que la durée de retour d'une baisse de 30% dans une journée semblable au krach boursier de 1987 est 15 milliards d'années. Les évènements réels ne sont qu'imparfaitement représentés par l'espérance mathématique.

L'étude « Schrodinger's Cat - A Study in Best Execution » de Gareth Adams, publiée dans l'ouvrage « Best Execution » par « European Asset Management Association » en juin 2002, considère que l'on ne peut éviter d'influencer le marché, en ce sens que toute mesure influence le phénomène mesuré.

L'invention vise à remédier aux inconvénients ci-dessus.

L'invention vise à fournir une référence de prix sensiblement indépendante d'un ordre.

La demanderesse s'est aperçue qu'il convenait de rendre l'estimation indépendante de la notion de temps.

Le dispositif de stockage, selon un aspect de l'invention, comprend un programme de commande d'un ordinateur pour l'estimation de l'échelle de risque d'une distribution de données, notamment pour exécuter un ordre de transaction, achat ou vente, d'une valeur sur un marché, ledit programme étant enregistré dans ledit dispositif de stockage et contenant des instructions aptes à effectuer, lorsque ledit programme est exécuté sur ledit ordinateur:
a) le calcul d'un volume théorique Vₜ égal au quotient du volume Vₒ d'un ordre par un coefficient prédéterminé de façon que l'ordre de volume Vₒ ne modifie pas significativement un marché de volume Vₜ et d'une durée Dₜ de traitement du volume théorique Vₜ sur le marché de la valeur considérée,
b) l'élimination des valeurs extrêmes de la distribution au-delà d'un quantile prédéterminé, et
c) le calcul d'une plage de variation de la valeur sur le marché sur une durée prédéterminée Dₚ.

Le choix d'une loi de distribution et la détermination des paramètres de ladite loi peut être effectué après l'étape a).

Avantageusement, la loi de distribution est une loi stable. La loi stable peut être une loi Lévy-stable. Avantageusement, on calcule les paramètres α, β et γ de la loi Lévy-stable. On obtient ainsi une représentation convenable de l'occurrence d'évènements rares.

Dans un autre mode de réalisation de l'invention, la loi de distribution est une loi normale.

Avantageusement, préalablement au calcul du volume théorique Vₜ, ledit programme détermine le prix P_{d} de la demande et le prix P_{f} de l'offre à l'instant de début d'un ordre sur le marché, à partir d'une base de données d'historiques de cours.

Dans un mode de réalisation de l'invention, ledit programme retranche du volume Vₒ de l'ordre, le volume V_{d} de la demande au prix P_{d} dans le cas d'un ordre de vente, et retranche du volume Vₒ de l'ordre, le volume V_{f} de l'offre au prix P_{f} dans le cas d'un ordre d'achat, pour obtenir un volume corrigé V_{c} à traiter à cours inconnu, le volume théorique Vₜ étant déterminé à partir du volume corrigé V_{c}. En effet, le volume V_{d} ou le volume Vₒ figurant au carnet d'ordre, peut être exécuté sans risque.

De préférence, à partir de la base de données d'historiques de cours, ledit programme sélectionne une population suffisante de derniers prix dans une durée élémentaire D_{é} écoulée, et calcule le volume moyen V_{é} échangé par durée élémentaire. Une base de données d'observations est renseignée, une observation comprenant une date, un volume, un prix et un nombre de transactions effectuées dans la durée élémentaire écoulée D_{é}. On parvient à réduire de façon considérable le volume de données à traiter, tout en conservant une excellente représentation des évènements réels. En d'autres termes, une observation est une transaction sélectionnée parmi un ensemble de transactions selon un critère temporel. Une observation comprend des données relatives à la dernière de la ou des transactions qui se sont produites pendant un intervalle de temps minimum prédéterminé. L'intervalle de temps minimum est préférablement constant, par exemple une minute, une heure, etc. L'intervalle de temps est avantageusement égal à la durée élémentaire D_{é} de telle sorte qu'au moins une transaction a eu lieu pendant l'intervalle de temps. La durée élémentaire D_{é} est donc variable selon la fréquence des transactions. La durée élémentaire D_{é} est en général égale à l'intervalle de temps minimum prédéterminé dans un marché liquide où les transactions sont nombreuses et peut être largement supérieure à l'intervalle de temps minimum prédéterminé dans un marché peu liquide où les transactions sont rares.

Dans un mode de réalisation de l'invention, à partir de la base de données d'historiques de cours, ledit programme sélectionne des durées élémentaires D_{é} écoulées de façon que chaque durée élémentaire D_{é} comprenne une transaction, et ledit programme calcule le volume moyen V_{é} échangé par durée élémentaire.

Dans un mode de réalisation de l'invention, ledit programme calcule la durée Dₜ de traitement du volume théorique Vₜ sur le marché considéré à partir du volume moyen V_{é} échangé par durée élémentaire, avec Dₜ = Vₜ/V_{é}. La durée Dₜ peut être exprimée en unité de durée élémentaire D_{é}.

Dans un mode de réalisation de l'invention, ledit programme calcule le rendement instantané Rᵢ en divisant un prix de marché à un instant i de fin d'une durée élémentaire par le prix de marché à un instant antérieur i-Δ avec Δ une durée prédéterminée. Δ peut être exprimé en unités de durée élémentaire D_{é}. Δ peut être égal à D_{é}, d'où Δ=1 en unités D_{é}, pour obtenir une distribution de rendements élémentaires. Les opérations ultérieures peuvent être réalisées à partir de la distribution de rendements élémentaires puis retransformées en prix.

Dans un mode de réalisation de l'invention, ledit programme simule la déviation du prix à partir de séries réelles historiques de prix de ladite valeur.

Dans un mode de réalisation de l'invention, à partir des paramètres de ladite loi, ledit programme calcule une plage de variation de prix ayant une probabilité prédéterminée. La probabilité prédéterminée peut être comprise entre 60 % et 99 %.

Dans un mode de réalisation de l'invention, après le calcul du risque de variation du marché sur la durée de base prédéterminée, ledit programme calcule le risque de variation de la valeur sur le marché sur la durée Dₜ compte tenu du volume Vₒ ou du volume V_{c}.

Dans un mode de réalisation de l'invention, ledit programme calcule un prix à atteindre lors de l'exécution de l'ordre par addition de la plage de variation du marché et d'un prix de référence de ladite valeur. Le prix de référence peut être égal au prix P_{d} de la demande dans le cas d'un ordre de vente et au prix P_{f} de l'offre dans le cas d'un ordre d'achat, à l'instant de début d'un ordre sur le marché.

Dans un mode de réalisation de l'invention, postérieurement à une transaction sur une valeur effectuée en exécution d'un ordre, ledit programme estime la qualité d'exécution de l'ordre en comparant le prix moyen d'exécution dudit ordre, un prix de référence de ladite valeur, et un prix à atteindre compte tenu des caractéristiques de l'ordre et du marché. Il peut aussi être tenu compte du paramètre β de la loi Lévy-stable pour estimer la qualité.

Dans un mode de réalisation de l'invention, ledit programme classe l'exécution de l'ordre selon que le prix d'exécution est compris dans la plage définie entre le prix à atteindre et le prix de référence, supérieur à ladite plage, ou inférieur à ladite plage.

Dans un mode de réalisation de l'invention, le dispositif comprend un moyen pour prendre en compte le paramètre β pour l'estimation de qualité dans le cas d'une loi Lévy-stable.

L'invention propose également un dispositif d'estimation de l'échelle de risque de données distribuées aléatoirement avec un lien de cohérence, notamment pour exécuter un ordre de transaction, achat ou vente, d'une valeur sur un marché. Le dispositif d'estimation comprend une unité de stockage d'historiques de données, un moyen de calcul d'un volume théorique Vₜ égal au quotient du volume Vₒ d'un ordre par un coefficient prédéterminé de façon que l'ordre de volume Vₒ ne modifie pas significativement un marché de volume Vₜ et d'une durée Dₜ de traitement du volume théorique Vₜ sur le marché de la valeur considérée, un filtre d'élimination des valeurs extrêmes de la distribution au-delà d'un quantile prédéterminé, et un moyen de calcul d'une plage de variation du marché sur une durée prédéterminée Dₚ.

Un moyen de choix d'une loi de distribution et de détermination des paramètres de ladite loi peut être prévu.

On entend par modification significative, une modification susceptible d'influencer le comportement des autres opérateurs sur le marché, par exemple une variation de prix de 2 %.

Dans un mode de réalisation de l'invention, le moyen de calcul du volume théorique Vₜ comprend un moyen pour déterminer, préalablement au calcul du volume théorique Vₜ, le prix P_{d} de la demande et le prix P_{f} de l'offre à l'instant de début d'un ordre sur le marché, à partir d'une base de données d'historiques de cours.

Dans un mode de réalisation de l'invention, le dispositif comprend un soustracteur pour retrancher du volume Vₒ de l'ordre, le volume V_{d} de la demande au prix P_{d} dans le cas d'un ordre de vente, et pour retrancher du volume Vₒ de l'ordre, le volume V_{f} de l'offre au prix P_{f} dans le cas d'un ordre d'achat, pour obtenir un volume corrigé V_{c} à traiter à cours inconnu, le volume théorique Vₜ étant déterminé à partir du volume corrigé V_{c}.

Dans un mode de réalisation de l'invention, le dispositif comprend un soustracteur pour retrancher du volume Vₒ de l'ordre, un volume Vₘ calculé à partir d'une moyenne de volumes traités sur le marché sur une courte durée précédant l'instant de début de l'ordre sur le marché, pour obtenir un volume corrigé V_{c} à traiter à cours inconnu, le volume théorique Vₜ étant déterminé à partir du volume corrigé V_{c}.

Dans un mode de réalisation de l'invention, le dispositif comprend un calculateur pour calculer le volume Vₘ à partir d'une moyenne de volumes affectés par un coefficient d'éloignement par rapport au prix du marché à l'instant de début de l'ordre sur le marché.

Dans un mode de réalisation de l'invention, le dispositif comprend un sélectionneur d'une population suffisante de derniers prix dans une durée élémentaire D_{é} écoulée, à partir de la base de données d'historiques de cours, et un calculateur du volume moyen V_{é} échangé par durée élémentaire. On peut avoir Dₚ=D_{é}.

Dans un mode de réalisation de l'invention, le dispositif comprend un sélectionneur des durées élémentaires D_{é} écoulées, à partir de la base de données d'historiques de cours, de façon que chaque durée élémentaire D_{é} comprenne une transaction et un calculateur du volume moyen V_{é} échangé par durée élémentaire.

Dans un mode de réalisation de l'invention, le dispositif comprend un calculateur de la durée Dₜ de traitement du volume théorique Vₜ sur le marché considéré à partir du volume moyen V_{é} échangé par durée élémentaire, avec Dₜ = Vₜ/V_{é}.

Dans un mode de réalisation de l'invention, le dispositif comprend un calculateur du rendement instantané Rᵢ en divisant un prix de marché à un instant i de fin d'une durée élémentaire par le prix de marché à l'instant i-Dₜ, pour obtenir une distribution de rendements élémentaires.

Dans un mode de réalisation de l'invention, le dispositif comprend un calculateur du risque de déviation du prix à partir de la loi de distribution.

Dans un mode de réalisation de l'invention, le dispositif comprend un simulateur de la déviation du prix à partir de séries réelles historiques de prix de ladite valeur.

Dans un mode de réalisation de l'invention, le dispositif comprend un calculateur d'une plage de variation de prix ayant une probabilité prédéterminée, à partir des paramètres de ladite loi.

Dans un mode de réalisation de l'invention, le dispositif comprend un calculateur du risque de variation du marché sur la durée Dₜ compte tenu du volume Vₒ ou du volume V_{c} d'après le risque de variation du marché sur la durée de base prédéterminée.

Dans un mode de réalisation de l'invention, le dispositif comprend un sommateur de la plage de variation du marché et d'un prix de référence de ladite valeur pour déterminer un prix à atteindre lors de l'exécution de l'ordre.

Dans un mode de réalisation de l'invention, le dispositif comprend un estimateur de la qualité d'exécution de l'ordre par comparaison du prix moyen d'exécution dudit ordre, d'un prix de référence de ladite valeur, et d'un prix à atteindre compte tenu des caractéristiques de l'ordre et du marché.

Dans un mode de réalisation de l'invention, le dispositif comprend un comparateur du prix d'exécution au prix à atteindre et au prix de référence pour déterminer un classement de la qualité d'exécution.

L'invention propose également l'utilisation dudit dispositif pour la mesure de la qualité d'exécution d'un ordre sur le marché ayant pour but de minimiser les coûts de frottement liés à la négociation. On peut aussi préciser les responsabilités respectives du gérant de portefeuille et du responsable de négociation.

L'invention s'applique notamment aux séries qui sont un cas particulier de distribution dont la fréquence est 1.

On entend ici par transaction un échange d'un bien matériel ou immatériel contre une quantité de référence, en général une somme monétaire, en exécution d'un ordre. La transaction est définie par une date définie en année-mois-jour-heure-minute-seconde, éventuellement milliseconde, par un prix, en général un prix unitaire, par une quantité et par une dénomination du bien échangé.

Contrairement aux outils de mesure présentant différents inconvénients tels que, le fait d'être influencé par l'exécution de l'ordre ou encore de laisser une possibilité d'appliquer une martingale, l'invention offre un outil adapté aux marchés dirigés par les ordres. L'invention se base sur le fait qu'il est nécessaire d'étaler l'exécution d'un ordre dans le temps afin de ne pas influencer le marché et que cet étalement temporel crée un risque de performance. On bénéficie ainsi d'une estimation de risque avant l'exécution de l'ordre et on peut comparer l'exécution réalisée avec le risque estimé au préalable. Il est possible d'estimer de façon objective la qualité d'exécution d'un ordre sur un marché. L'invention s'applique aussi aux marchés dirigés par les prix, de fixing, et d'appel d'offres, dans la mesure où un historique d'observations statistiquement suffisant existe.

Un ordre est caractérisé par une date tₒ, une quantité également appelée volume Nₒ, un sens, achat ou vente, et une valeur représentée par un code, par exemple un code Sicovam.

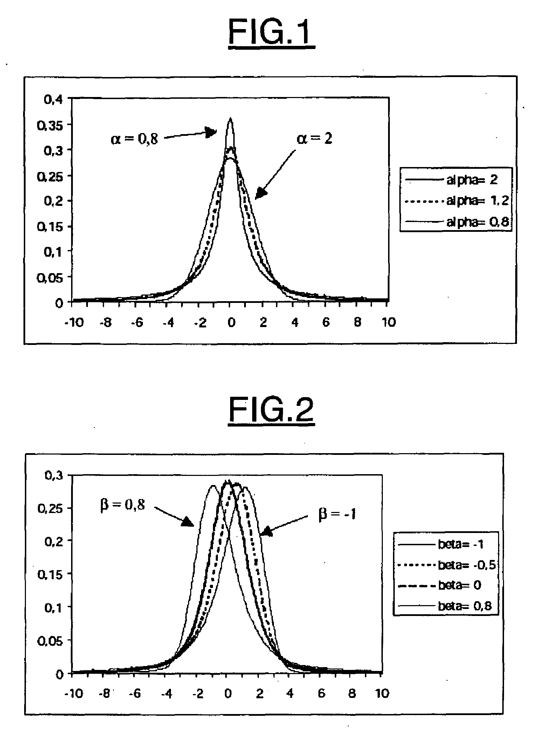

Une distribution stable est une famille de fonctions de distribution telles que si des variables aléatoires x et y ont chacune des distributions provenant de cette famille alors la variable aléatoire z = x + y a une distribution de la même famille. Des exemples sont montrés sur les figures 1 et 2. La distribution normale ou gaussienne est un cas particulier de distribution stable dans laquelle la variance est finie. La distribution de Cauchy est un cas de distribution stable non gaussienne: f(x) = 1/(π(1+x²)). On pourra se reporter à la page Internet http://www.sjsu.edu/faculty/watkins/stable.htm relative aux travaux du mathématicien Paul Lévy.

La présente invention sera mieux comprise à la lecture de la description détaillée de quelques modes de réalisation pris à titre d'exemples nullement limitatifs et illustrés par les dessins annexés, sur lesquels:
- les figures 1 et 2 sont des courbes représentatives de distributions Lévy-stables et montrent l'influence des paramètres α et β;
- la figure 3 est un organigramme de fonctionnement du procédé réalisé par le dispositif selon un mode de réalisation de l'invention;
- la figure 4 est une vue plus détaillée de la figure 3;
- la figure 5 est une variante de la figure 4; et

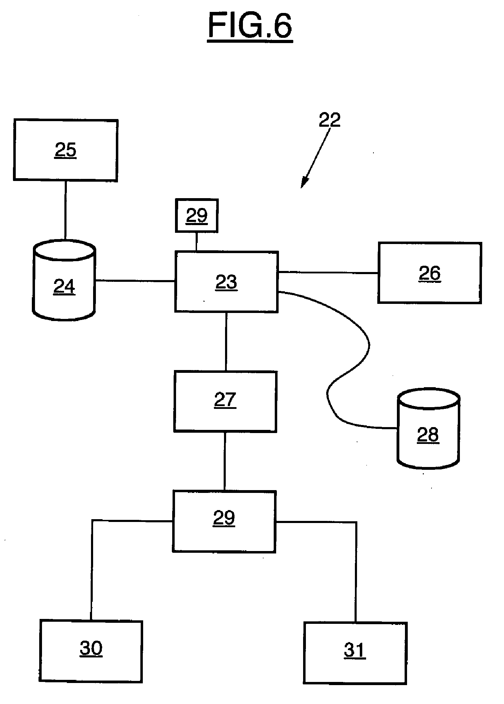

- la figure 6 est une vue schématique d'un dispositif selon un mode de réalisation de l'invention.

Comme on peut le voir sur la figure 1, le programme de commande d'ordinateur pour l'estimation de l'échelle de risque d'une distribution de données, comprend les instructions nécessaires pour effectuer les étapes suivantes.

A l'étape 1, l'ordinateur sur lequel est stocké le programme reçoit un ordre 1 sous la forme d'un message comprenant une indication temporelle tₒ, notamment une date, par exemple la date de réception de l'ordre par ledit ordinateur ou la date d'émission de l'ordre par un dispositif de traitement auquel est relié ledit ordinateur. On peut également prévoir que la date soit attribuée à l'ordre lors de sa réception. Le message comprend également une quantité Vₒ, un sens, achat ou vente, et un identifiant de la valeur à traiter.

A l'étape 2, l'ordinateur interroge une base de données en employant ledit identifiant et reçoit en retour un historique des cours de la valeur identifiée par l'identifiant, ledit historique formant une distribution de données comprenant dates, volumes, prix, etc.

A l'étape 3, l'ordinateur calcule un volume théorique Vₜ égal au quotient du volume Vₒ de l'ordre par un coefficient prédéterminé, par exemple de l'ordre de 10 à 25%, choisi de façon telle que l'ordre de volume Vₒ ne modifie pas significativement un marché de volume Vₜ. La durée Dₜ de traitement du volume théorique Vₜ sur le marché de la valeur identifiée est également calculée. Ainsi, on connaît la durée Dₜ à prendre en compte pour que l'ordre considéré puisse être traité en une ou plusieurs transactions sans perturber de façon significative le marché. En effet, on considère qu'en général un ordre représentant plus de 25% du marché, a une influence déterminante sur le cours de la valeur identifiée et est donc trop important par rapport à la liquidité offerte par le marché relativement audit ordre.

A l'étape 4, est effectué le choix d'une loi de distribution. De préférence, on choisira une loi stable, en particulier une loi Lévy-stable. Toutefois, on peut aussi envisager d'utiliser d'autres lois de distribution. L'étape 4 comprend donc la réception 4a d'une loi Lévy-stable ou la réception 4b d'une loi stable ou encore la réception 4c d'une loi normale. En option, l'étape 4 peut être omise si la même loi de distribution est utilisée systématiquement et préenregistrée.

A l'étape 5, mise en oeuvre dans le cas où la loi de distribution est une loi stable, est effectuée la détermination des paramètres α, β et γ de la loi stable. On peut également prévoir la détermination du paramètre µ, à titre optionnel. Le paramètre α est représentatif du sommet de la distribution et de son aspect leptokurtique et est compris entre 0 et 2. Le paramètre β est représentatif de la symétrie de la distribution et est compris entre -1 et +1. Le paramètre γ est un facteur d'échelle qui est un nombre positif ou nul. Il peut être considéré comme représentatif de l'étalement de la distribution. Le paramètre µ correspond à la moyenne de la distribution si le paramètre α est compris entre 1 et 2 et est représentatif de l'étalement.

Bien entendu, si la loi de distribution choisie comporte des paramètres prédéterminés, l'étape 5 est omise. Une fois les paramètres de la loi de distribution déterminés, on passe à l'étape 6 d'élimination de valeurs extrêmes de la distribution au-delà d'un quantile prédéterminé. A titre d'exemple, on peut conserver 95% des valeurs de la distribution et éliminer les 5% extrêmes pour pouvoir établir une probabilité à 95%.

A l'étape 7, on calcule une plage de variations du marché sur une durée de base prédéterminée. En d'autres termes, on détermine une enveloppe de variation de cours ou de rendements notée Eᵥ, dans laquelle une probabilité de 95% peut se situer pendant la durée de base. Entre des instants séparés par une durée de base, la valeur identifiée a 95% de chance de voir son cours évoluer entre 100+Eᵥ% et 100-Eᵥ%, Eᵥ étant donc déterminé à l'étape 7.

Après le calcul de la variation possible du marché sur la durée de base prédéterminée, on calcule la variation probable du marché sur la durée Dₜ, compte tenu du volume Vₒ de l'ordre, voir étape 8. Si l'on a traité une population de rendements, on réintroduit alors à l'étape 8 la grandeur « prix ».

A l'étape 9, mise en oeuvre dans le cas d'une estimation de risque préalable à l'exécution d'une transaction, on calcule un prix à atteindre lors de l'exécution de la transaction par addition de la plage de variation du marché et d'un prix de référence de la valeur. Le prix de référence sera en général égal au prix P_{d} de la demande dans le cas d'un ordre de vente et au prix P_{f} de l'offre dans le cas d'un ordre d'achat, à l'instant tₒ de début de l'ordre sur le marché.

Les étapes qui viennent d'être décrites peuvent, avantageusement être re-exécutées après qu'un ordre aura commencé à être traité sur un marché afin d'avoir un prix à atteindre mis à jour. Cette mise à jour peut être effectuée à intervalles de temps réguliers, ou après traitement d'une tranche donnée de l'ordre en fonction du volume de l'ordre.

Alternativement, dans le cas de l'estimation de la qualité d'exécution d'un ordre à posteriori, on exécute l'étape 10 d'estimation de la qualité d'exécution de l'ordre par comparaison du prix moyen d'exécution de l'ordre, d'un prix de référence de ladite valeur, par exemple le prix P_{d} ou le prix P_{f} et d'un prix à atteindre, compte tenu des caractéristiques respectives de l'ordre et du marché. Le prix à atteindre peut être calculé dans le cas d'un ordre d'achat par addition du prix de référence et de l'enveloppe de variation probable à 95% calculée à l'étape 8.

Enfin, à l'étape 12, on effectue une comparaison du prix d'exécution au prix à atteindre et au prix de référence pour déterminer un classement de la qualité d'exécution. La qualité d'exécution est considérée comme très bonne si, dans le cas d'un ordre d'achat, elle est inférieure au prix de référence, correcte si elle est comprise entre le prix de référence et le prix à atteindre, médiocre si elle est supérieure au prix à atteindre.

Dans le cas d'un ordre de vente, la qualité d'exécution est classée comme très bonne si le prix d'exécution est supérieur au prix de référence, correcte s'il est compris entre le prix de référence et le prix à atteindre, médiocre s'il est inférieur au prix à atteindre. On peut ainsi noter, de façon objective, la performance de la personne ayant négocié l'exécution de l'ordre. Ces notes peuvent être stockées et comparées.

Il est remarquable de constater qu'un tel outil de mesure de la qualité d'exécution d'un ordre est relativement indépendant de l'évolution instantanée de la liquidité de la valeur et insensible aux martingales qui peuvent être appliquées lorsqu'on compare le prix moyen d'exécution d'un ordre à un cours moyen pondéré par les volumes ou à une moyenne, pondérée ou non, des prix d'ouverture, de fermeture, de plus haut et de plus bas du marché pendant une journée.

Sur la figure 2, est illustrée plus en détail l'étape 3 qui se décompose en sous-étapes 13 à 20.

A l'étape 13, l'ordinateur sélectionne dans l'historique de cours reçu à l'étape 2, une population d'observations pour renseigner une base de données d'observation. Une observation est caractérisée par une date, un volume et un prix. Le prix retenu est le prix de la dernière transaction pendant une durée élémentaire D_{é} variable écoulée, pendant laquelle au moins une transaction a été exécutée. A partir de la population d'observations, l'ordinateur calcule à l'étape 14 le volume moyen V_{é} échangé par durée élémentaire D_{é}. Le calcul est effectué par addition des volumes des observations et division de la somme ainsi obtenue par le nombre d'observations de la population concernée.

L'ordinateur exécute ensuite l'étape 15 ou l'étape 16, selon que l'ordre reçu à l'étape 1 de la figure 1 est respectivement un ordre de vente ou un ordre d'achat. A l'étape 15, l'ordinateur détermine à partir de l'historique de cours le volume V_{d} de la demande au prix P_{d}. De façon similaire, à l'étape 16, le volume V_{f} de l'offre au prix P_{f} est sélectionné.

A l'étape 17, le volume corrigé V_{c} est calculé en soustrayant du volume de l'ordre Vₒ le volume V_{d} si l'étape 15 a été exécutée, et le volume V_{f} si l'étape 16 a été exécutée. Le volume corrigé V_{c} correspond au volume qui doit être traité à cours inconnu, le volume V_{d}, ou respectivement le volume V_{f}, pouvant être traité à cours connu, et donc sans risque. Il en découle que, si le volume de l'ordre Vₒ est inférieur au volume V_{d} ou, respectivement, au volume V_{f}, le risque à l'exécution de l'ordre est très faible.

A l'étape 18, le volume théorique Vₜ est calculé en divisant le volume corrigé V_{c} issu de l'étape 17 par un coefficient I exprimé en pourcentage et qui représente la limite relative de volume d'un ordre par rapport à un marché non perturbé par l'exécution de l'ordre. On considère en général qu'un ordre, dont le volume est supérieur à 25% en volume du marché, influence très fortement le marché et ne peut être exécuté à de bonnes conditions.

La demanderesse s'est aperçue qu'un coefficient I de l'ordre de 15% réalise un bon compromis entre la faible perturbation du marché et le délai d'exécution de l'ordre, qui doivent tous deux être le plus faible possible.

A l'étape 19, à partir du calcul du volume théorique Vₜ, l'ordinateur calcule la durée théorique Dₜ nécessaire pour exécuter l'ordre, compte tenu du volume du marché à partir de l'historique de cours. La durée théorique Dₜ peut être exprimée en unités de temps du système international, par exemple en minutes ou en secondes. Toutefois, on préfère exprimer la durée Dₜ sur la base de la durée élémentaire D_{é} décrite en relation avec l'étape 13 ci-dessus.

Ce mode de réalisation est particulièrement avantageux, en ce sens qu'il permet de faire abstraction du temps en vue d'une mesure de risque objective. La durée théorique Dₜ, exprimée en durée élémentaire D_{é}, est égale au quotient du volume théorique Vₜ par le volume élémentaire moyen V_{é}.

A l'étape 20, l'ordinateur calcule le rendement instantané Rᵢ en divisant le prix d'une observation par le prix d'une observation précédente, par exemple plus ancienne que la première d'une durée Dₜ. Ainsi, le rendement instantané Rᵢ peut être vu comme résultant de la division d'un prix de marché à un instant t de fin d'une durée élémentaire par le prix de marché à l'instant t-Dₜ, pour obtenir une distribution de rendements élémentaires. Il est en effet intéressant d'effectuer les étapes suivantes, voir figure 1, en traitant une population de rendements instantanés Rᵢ et en réintroduisant les variables de prix à l'étape 8. Toutefois, l'étape 20 est optionnelle et il est possible de l'omettre en exécutant les étapes 4 à 8 sur une population de prix.

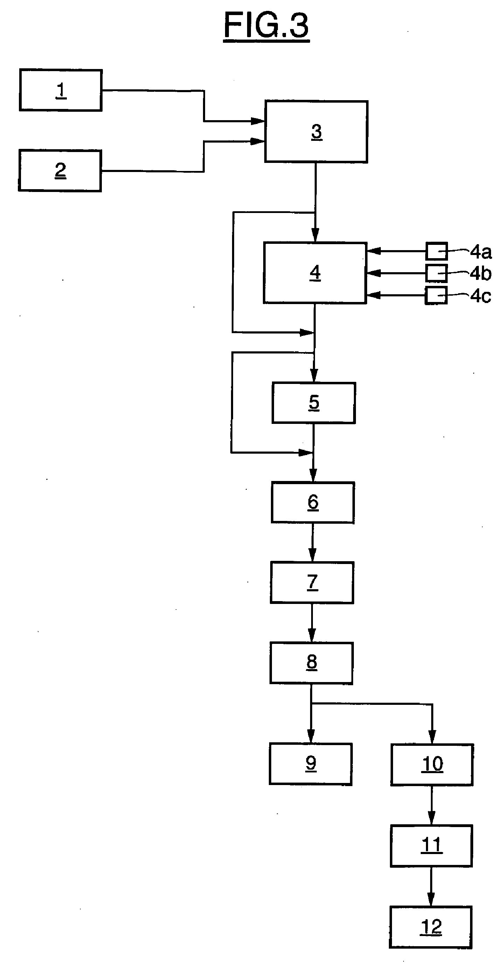

Sur la figure 3, est illustrée une variante de la figure 2, dans laquelle une étape 21 est ajoutée avant l'étape 17 de détermination du volume corrigé V_{c} et après les étapes 15 et 16 de détermination des prix P_{d} et P_{f}.

Lors de l'étape 21, on détermine un volume Vₘ à partir d'une moyenne de volume traité sur le marché sur une courte durée précédant l'instant tₒ de début de l'ordre sur le marché. Ladite courte durée peut être exprimée en unités de temps ou en durées élémentaires D_{é}. La détermination du volume Vₘ est intéressante dans certains cas de déséquilibre entre le volume V_{d} de la demande et le volume V_{f} de l'ordre.

Lors de l'étape 17 qui suit, le volume Vₘ est retranché du volume de l'ordre Vₒ pour obtenir le volume corrigé V_{c}. Les autres étapes sont semblables à celles illustrées sur la figure 2.

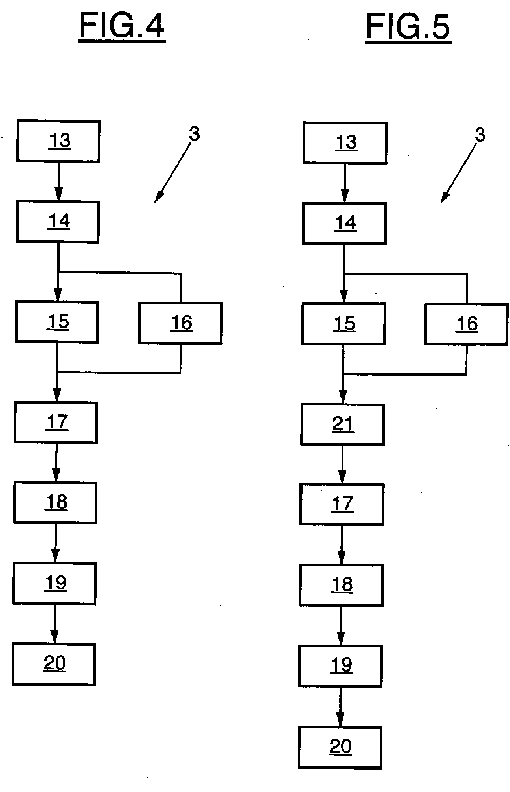

Sur la figure 4, est illustré de façon schématique un mode de réalisation d'un système d'estimation de l'échelle de risques de données distribué aléatoirement avec un lien de cohérence.

Le système 22 comprend un calculateur 23 du volume théorique Vₜ, une base de données d'historique de cours 24 reliée à un fournisseur d'historique de cours 25 qui est généralement un système distant. Le calculateur 23 est également relié à un émetteur d'ordre 26, généralement distant.

Le système 22 comprend en outre un filtre 27 relié au calculateur 23, et apte à effectuer le filtrage de la distribution pour supprimer la proportion prévue de valeurs extrêmes.

Le système 22 comprend également une base de données supplémentaires 28 apte à stocker les observations réalisées, une observation étant caractérisée au moins par une date, un prix, un volume et un identifiant de la valeur.

Le système 22 comprend, de façon optionnelle, un stockage 29 de lois de distribution reliées au calculateur 23. Toutefois, dans une version préférée, une loi de distribution, par exemple la loi Lévy-stable, est stockée directement dans une mémoire du calculateur 23, le calculateur 23 comprenant au moins une mémoire vive, au moins une mémoire morte, au moins une unité centrale et des interfaces d'entrée/sortie.

Le système 22 se complète par un calculateur de plages de variations de marché 29 relié au filtre 27, le calculateur 29 étant en outre capable de calculer la variation du marché sur la durée Dₜ et, si nécessaire, de réintroduire la grandeur prix à partir de la variation des rendements en multipliant le rendement par le prix du début de la période de calcul du rendement correspondant.

Selon l'application souhaitée, le système peut comprendre un estimateur 30 du risque préalable à l'exécution d'une transaction et/ou un estimateur de la qualité d'exécution d'un ordre à posteriori 31. Les estimateurs 30 et 31 sont pourvus de moyens graphiques permettant de réaliser une présentation des résultats de l'estimation.

Bien entendu, on comprendra que l'invention peut être mise en oeuvre de diverses manières. Toutefois, pour des applications particulières, il est intéressant de réaliser le calculateur 23, le filtre 27, le calculateur 29 ou encore les estimateurs 30 et 31, sous la forme de circuits programmables ou préprogrammés, particulièrement fiables et disposant de la puissance de calcul nécessaire. La base de données 24 peut être distante. Toutefois, on préférera en général une base de données 24 locale en vue d'un accès plus rapide aux historiques de cours.

Grâce à l'invention, on dispose d'un moyen d'estimation performant, d'utilisation facile, permettant une appréciation objective de la qualité d'exécution d'un ordre et donc de la prestation de l'opérateur responsable de la négociation.

## Revendications

1. Dispositif de stockage dans lequel est enregistré un programme de commande d'un ordinateur pour l'estimation de l'échelle de risque d'une distribution de données, notamment pour exécuter un ordre de transaction, achat ou vente, d'une valeur sur un marché, ledit programme contenant des instructions aptes à effectuer, lorsque ledit programme est exécuté sur ledit ordinateur :
- le calcul d'un volume théorique Vₜ égal au quotient du volume Vₒ d'un ordre par un coefficient prédéterminé de façon que l'ordre de volume Vₒ ne modifie pas significativement un marché de volume Vₜ et d'une durée théorique Dₜ de traitement du volume Vₜ sur le marché de la valeur considérée,
- l'élimination des valeurs extrêmes de la distribution au delà d'un quantile prédéterminé,
- le calcul d'une plage de variation de la valeur sur le marché sur une durée prédéterminée Dₚ.

2. Dispositif selon la revendication 1, **caractérisé par le fait qu'**il comprend un moyen de choix d'une loi de distribution et de détermination des paramètres de ladite loi.

3. Dispositif selon la revendication 1 ou 2, dans lequel la loi de distribution est une loi stable.

4. Dispositif selon la revendication 3, dans lequel la loi stable est une loi Lévy-stable et on calcule les paramètres α, β et γ de la loi Lévy-stable.

5. Dispositif selon l'une quelconque des revendications précédentes, dans lequel, préalablement au calcul du volume théorique Vₜ, ledit programme détermine le prix P_{d} de la demande et le prix P_{f} de l'offre à l'instant de début d'un ordre sur le marché, à partir d'une base de données d'historiques de cours.

6. Dispositif selon la revendication précédente, dans lequel ledit programme retranche du volume Vₒ de l'ordre, le volume V_{d} de la demande au prix P_{d} dans le cas d'un ordre de vente, et on retranche du volume Vₒ de l'ordre, le volume V_{f} de l'offre au prix P_{f} dans le cas d'un ordre d'achat, pour obtenir un volume corrigé V_{c} à traiter à cours inconnu, le volume théorique Vₜ étant déterminé à partir du volume corrigé V_{c}.

7. Dispositif selon l'une quelconque des revendications 4 à 6, dans lequel à partir de la base de données d'historiques de cours, ledit programme sélectionne une population suffisante de derniers prix observés dans une durée élémentaire D_{é} écoulée, ledit programme calcule le volume moyen V_{é} échangé par durée élémentaire, et une base de données d'observations est renseignée, une observation comprenant une date, un volume, un prix, et un nombre de transactions effectuées dans la durée élémentaire écoulée D_{é}.

8. Dispositif selon l'une quelconque des revendications 4 à 6, dans lequel à partir de la base de données d'historiques de cours, ledit programme sélectionne des durées élémentaires D_{é} écoulées de façon que chaque durée élémentaire D_{é} comprenne une transaction, et ledit programme calcule le volume moyen V_{é} échangé par durée élémentaire.

9. Dispositif selon l'une quelconque des revendications 4 à 6, dans lequel ledit programme calcule la durée Dₜ de traitement du volume théorique Vₜ sur le marché considéré à partir du volume moyen V_{é} échangé par durée élémentaire, avec Dₜ = Vₜ/V_{é}.

10. Dispositif selon l'une quelconque des revendications précédentes, dans lequel ledit programme calcule le rendement instantané Rᵢ en divisant un prix de marché à un instant i de fin d'une durée élémentaire par le prix de marché à un instant antérieur i-Δ avec Δ une durée prédéterminée, pour obtenir une distribution de rendements élémentaires.

11. Dispositif selon la revendication précédente, dans lequel ledit programme simule la déviation du prix à partir de séries réelles historiques de prix de ladite valeur.

12. Dispositif selon l'une quelconque des revendications précédentes, dans lequel à partir des paramètres de ladite loi, ledit programme calcule une plage de variation de prix ayant une probabilité prédéterminée.

13. Dispositif selon l'une quelconque des revendications précédentes, dans lequel après le calcul du risque de variation du marché sur la durée de base prédéterminée, ledit programme calcule le risque de variation de la valeur sur le marché sur la durée Dₜ compte tenu du volume Vₒ ou du volume V_{c}.

14. Dispositif selon la revendication précédente, dans lequel ledit programme calcule un prix à atteindre lors de l'exécution de l'ordre par addition de la plage de variation du marché et d'un prix de référence de ladite valeur.

15. Dispositif selon la revendication précédente, dans lequel le prix de référence est égal au prix P_{d} de la demande dans le cas d'un ordre de vente et au prix P_{f} de l'offre dans le cas d'un ordre d'achat, à l'instant de début d'un ordre sur le marché.

16. Dispositif selon l'une quelconque des revendications précédentes, dans lequel postérieurement à une transaction sur une valeur effectuée en exécution d'un ordre, ledit programme estime la qualité d'exécution de l'ordre en comparant le prix moyen d'exécution dudit ordre, un prix de référence de ladite valeur, et un prix limite compte tenu des caractéristiques de l'ordre et du marché.

17. Dispositif selon la revendication 16, **caractérisé par le fait qu'**il comprend un moyen pour prendre en compte le paramètre β pour l'estimation de qualité dans le cas d'une loi Lévy-stable.

18. Dispositif d'estimation de l'échelle de risque de données distribuées aléatoirement avec un lien de cohérence, notamment pour exécuter un ordre de transaction, achat ou vente, d'une valeur sur un marché, **caractérisé par le fait qu'**il comprend une unité de stockage d'historiques de données, un moyen de calcul d'un volume théorique Vₜ égal au quotient du volume Vₒ d'un ordre par un coefficient prédéterminé de façon que l'ordre de volume Vₒ ne modifie pas significativement un marché de volume Vₜ et d'une durée Dₜ de traitement du volume théorique Vₜ sur le marché de la valeur considérée, un filtre d'élimination des valeurs extrêmes de la distribution au delà d'un quantile prédéterminé, et un moyen de calcul d'une plage de variation du marché sur une durée prédéterminée Dₚ.

19. Dispositif selon la revendication 18, **caractérisé par le fait qu'**il comprend un moyen de choix d'une loi de distribution et de détermination des paramètres de ladite loi.

20. Dispositif selon la revendication 19, **caractérisé par le fait que** le moyen de calcul d'un volume théorique Vₜ comprend un moyen pour déterminer, préalablement au calcul du volume théorique Vₜ, le prix P_{d} de la demande et le prix P_{f} de l'offre à l'instant de début d'un ordre sur le marché, à partir d'une base de données d'historiques de cours.

21. Dispositif selon la revendication 20, **caractérisé par le fait qu'**il comprend un soustracteur pour retrancher du volume Vₒ de l'ordre, le volume V_{d} de la demande au prix P_{d} dans le cas d'un ordre de vente, et pour retrancher du volume Vₒ de l'ordre, le volume V_{f} de l'offre au prix P_{f} dans le cas d'un ordre d'achat, ou un volume Vₘ calculé à partir d'une moyenne de volumes traités sur le marché sur une courte durée précédant l'instant de début de l'ordre sur le marché, pour obtenir un volume corrigé V_{c} à traiter à cours inconnu, le volume théorique Vₜ étant déterminé à partir du volume corrigé V_{c}.

22. Dispositif selon la revendication 20 ou 21, **caractérisé par le fait qu'**il comprend un sélectionneur d'une population suffisante de derniers prix dans une durée élémentaire D_{é} écoulée, à partir de la base de données d'historiques de cours, et un calculateur du volume moyen V_{é} échangé par durée élémentaire et un sélectionneur des durées élémentaires D_{é} écoulées, à partir de la base de données d'historiques de cours, de façon que chaque durée élémentaire D_{é} comprenne une transaction et un calculateur du volume moyen V_{é} échangé par durée élémentaire.

23. Dispositif selon l'une quelconque des revendications 18 à 21, **caractérisé par le fait qu'**il comprend un calculateur de la durée Dₜ de traitement du volume théorique Vₜ sur le marché considéré à partir du volume moyen V_{é} échangé par durée élémentaire, avec Dₜ = Vₜ /V_{é}.

24. Dispositif selon l'une quelconque des revendications précédentes, **caractérisé par le fait qu'**il comprend un calculateur du rendement instantané Rᵢ en divisant un prix de marché à un instant i de fin d'une durée élémentaire par le prix de marché à l'instant i-Dₜ, pour obtenir une distribution de rendements élémentaires.

25. Dispositif selon l'une quelconque des revendications précédentes, **caractérisé par le fait qu'**il comprend un calculateur du risque de déviation du prix à partir de la loi de distribution et un simulateur de la déviation du prix à partir de séries réelles historiques de prix de ladite valeur.

26. Dispositif selon l'une quelconque des revendications précédentes, **caractérisé par le fait qu'**il comprend un calculateur d'une plage de variation de prix ayant une probabilité prédéterminée, à partir des paramètres de ladite loi.

27. Dispositif selon l'une quelconque des revendications précédentes, **caractérisé par le fait qu'**il comprend un calculateur de variation probable du marché sur la durée Dₜ compte tenu du volume Vₒ ou du volume V_{c} d'après la variation probable du marché sur la durée de base prédéterminée et un sommateur de la variation probable du marché et d'un prix de référence de ladite valeur pour déterminer un prix à atteindre lors de l'exécution de l'ordre.

28. Dispositif selon l'une quelconque des revendications précédentes, **caractérisé par le fait qu'**il comprend un estimateur de la qualité d'exécution de l'ordre par comparaison du prix moyen d'exécution dudit ordre, d'un prix de référence de ladite valeur, et d'un prix à atteindre compte tenu des caractéristiques de l'ordre et du marché.

29. Dispositif selon la revendication 28, **caractérisé par le fait qu'**il comprend un comparateur du prix d'exécution au prix à atteindre et au prix de référence pour déterminer un classement de la qualité d'exécution.

30. Utilisation du dispositif selon l'une quelconque des revendications 18 à 29 pour la mesure de la qualité d'exécution d'un ordre sur le marché ayant pour but de minimiser les coûts de frottement liés à la négociation.
